# EUROPEAN PATENT APPLICATION

(11) **EP 4 451 433 A1**
(43) Date of publication of application: **23.10.2024**
(21) Application number: 22907564.3
(22) Date of filing: 16.12.2022
(51) Int. Cl.: H01M 50/105, H01G 11/78, H01M 50/103, H01M 50/121, H01M 50/129, H01M 50/133, H01M 50/15, H01M 50/16, H01M 50/166, H01M 50/198

(54) **POWER STORAGE DEVICE, LID, AND POWER STORAGE DEVICE MANUFACTURING METHOD**

(30) Priority: 17.12.2021 JP 2021205585; 17.12.2021 JP 2021205586
(71) Applicant: Dai Nippon Printing Co., Ltd., Tokyo 162-8001 (JP)
(72) Inventor: AKUTSU, Koki, Tokyo 162-8001 (JP); SASAKI, Miho, Tokyo 162-8001 (JP)
(74) Representative: Müller-Boré & Partner Patentanwälte PartG mbB
(86) International application number: PCT/JP2022/046554
(87) International publication number: WO 2023/113042

(57) **Abstract**

This power storage device comprises an electrode body and an exterior body sealing the electrode body, wherein: the exterior body includes an exterior film wound on the electrode body so as to have an opening, a lid disposed in the opening, a first sealing part where mutually facing surfaces of the exterior film are sealed, and a second sealing part where mutually facing surfaces of the lid and the exterior film are sealed; and the sealing strength of the second sealing part is 40 N/15 mm or higher.

## Description

### Technical Field

The present invention relates to an electrical storage device, a lid, and a method for manufacturing an electrical storage device.

### Background Art

PTL 1 discloses an all-solid-state battery as an example of an electrical storage device. The all-solid-state battery includes an electrode assembly, and an outer packaging that seals the electrode assembly. The outer packaging includes an exterior film wound around the electrode assembly so as to have an opening, and a lid disposed at the opening. The exterior film and the outer peripheral surface of the lid are heat-sealed.

### Citation List

### Patent Literature

PTL 1: Japanese Patent Laid-open Publication No. 2019-153504

### Summary of Invention

### Technical Problem

In an electrical storage device, it is preferable that an exterior film and a lid are firmly joined to each other for maintaining a state in which an electrode assembly is sealed by an outer packaging. The all-solid-state battery described above has room for improvement on that point.

An object of the present invention is to provide an electrical storage device that suitably maintains a state in which an electrode assembly is sealed by an outer packaging, a lid that is used for the electrical storage device, and a method for manufacturing an electrical storage device.

### Solution to Problem

An electrical storage device according to a first aspect of the present invention includes an electrode assembly, and an outer packaging that seals the electrode assembly, the outer packaging includes an exterior film wound around the electrode assembly so as to have an opening, a lid disposed at the opening, a first sealed portion in which surfaces of the exterior film which face each other are sealed, and a second sealed portion in which surfaces of the lid and the exterior film which face each other are sealed, and a sealing strength of the second sealed portion is 40 N/15 mm or more.

An electrical storage device according to a second aspect of the present invention includes an electrode assembly, and an outer packaging that seals the electrode assembly, the outer packaging includes an exterior film wound around the electrode assembly so as to have an opening, a lid disposed at the opening, a first sealed portion in which surfaces of the exterior film which face each other are sealed, and a second sealed portion in which surfaces of the lid and the exterior film which face each other are sealed, the lid includes a first surface on the electrode assembly side, and a second surface opposite to the first surface, an inner resin lump is formed between the first surface and the exterior film, an outer resin lump is formed between the second surface and the exterior film, and a length of the inner resin lump is smaller than a length of the outer resin lump.

An electrical storage device according to a third aspect of the present invention includes an electrode assembly, and an outer packaging that seals the electrode assembly, the outer packaging includes an exterior film wound around the electrode assembly so as to have an opening, a lid disposed at the opening, a first sealed portion in which surfaces of the exterior film which face each other are sealed, and a second sealed portion in which surfaces of the lid and the exterior film which face each other are sealed, the exterior film includes a lid wrapping portion that is sealed to the lid in the second sealed portion, the lid includes a lid seal surface that is sealed to the exterior film in the second sealed portion, and a ratio of a length of the lid wrapping portion to a length of the lid seal surface is 103% or less.

An electrical storage device according to a fourth aspect of the present invention is the electrical storage device according to the first or third aspect, in which the lid includes a first surface on the electrode assembly side, and a second surface opposite to the first surface, an inner resin lump is formed between the first surface and the exterior film, an outer resin lump is formed between the second surface and the exterior film, the exterior film includes a heat-sealable resin layer that is sealed to the lid, and a ratio of a thickness of the inner resin lump to a thickness of the heat-sealable resin layer is 200% or less.

An electrical storage device according to a fifth aspect of the present invention is the electrical storage device according to the third aspect, in which the sealing strength of the second sealed portion is 40 N/15 mm or more.

An electrical storage device according to a sixth aspect of the present invention is the electrical storage device according to any one of the first to fifth aspects, in which the exterior film includes a heat-sealable resin layer that is sealed to the lid, and main components of a material for forming the heat-sealable resin layer and a material for forming the lid are the same.

An electrical storage device according to a seventh aspect of the present invention is the electrical storage device according to the third aspect, in which the lid includes a first surface on the electrode assembly side, and a second surface opposite to the first surface, an inner resin lump is formed between the first surface and the exterior film, an outer resin lump is formed between the second surface and the exterior film, and a length of the inner resin lump is smaller than a length of the outer resin lump.

An electrical storage device according to an eighth aspect of the present invention is the electrical storage device according to the third aspect, in which the lid includes a first surface on the electrode assembly side, and a second surface opposite to the first surface, an inner resin lump is formed between the first surface and the exterior film, an outer resin lump is formed between the second surface and the exterior film, the exterior film includes a heat-sealable resin layer that is sealed to the lid, and a ratio of a thickness of the inner resin lump to a thickness of the heat-sealable resin layer is 200% or less.

A lid according to a ninth aspect of the present invention is a lid that is used for an outer packaging of an electrical storage device, in which the outer packaging includes an exterior film wound around an electrode assembly so as to have an opening, the lid is disposed at the opening, and includes a seal surface that is sealed to the exterior film, and the seal surface includes a concave portion.

A lid according to a tenth aspect of the present invention is a lid that is used for an outer packaging of an electrical storage device, in which the outer packaging includes an exterior film wound around an electrode assembly so as to have an opening, the lid is disposed at the opening, and includes a seal surface that is sealed to the exterior film, and the seal surface includes a groove.

A lid according to an eleventh aspect of the present invention is a lid that is used for an outer packaging of an electrical storage device, in which the outer packaging includes an exterior film wound around an electrode assembly so as to have an opening, the lid is disposed at the opening, and includes a first surface on the electrode assembly side, a second surface opposite to the first surface, and a seal surface that connects the first surface and the second surface, and is sealed to the exterior film, and the seal surface includes a sloping surface that slopes so as to approach a center of the lid in a height direction as the first surface is approached from the second surface.

An electrical storage device according to a twelfth aspect of the present invention is an electrical storage device including the lid according to any one of the ninth to eleventh aspects, the electrical storage device including an electrode assembly, and an outer packaging that seals the electrode assembly, the outer packaging including an exterior film wound around the electrode assembly so as to have an opening, the lid disposed at the opening, a first sealed portion in which surfaces of the exterior film which face each other are sealed, and a second sealed portion in which surfaces of the lid and the exterior film which face each other are sealed.

A method for manufacturing an electrical storage device according to a thirteenth aspect of the present invention is a method for manufacturing an electrical storage device including an electrode assembly, and an outer packaging that seals the electrode assembly, in which the outer packaging includes an exterior film wound around the electrode assembly so as to have an opening, a lid disposed at the opening, a first sealed portion in which surfaces of the exterior film which face each other are sealed, and a second sealed portion in which surfaces of the lid and the exterior film which face each other are sealed, the lid includes a first surface on the electrode assembly side, and a second surface opposite to the first surface, the method for manufacturing the electrical storage device includes a sealing step of forming the second sealed portion using a seal bar, and in the sealing step, the seal bar is sloped so as to draw closer to a boundary between the first surface and the exterior film than to a boundary between the second surface and the exterior film.

A method for manufacturing an electrical storage device according to a fourteenth aspect of the present invention is a method for manufacturing an electrical storage device including an electrode assembly, and an outer packaging that seals the electrode assembly, in which the outer packaging includes an exterior film wound around the electrode assembly so as to have an opening, a lid disposed at the opening, a first sealed portion in which surfaces of the exterior film which face each other are sealed, and a second sealed portion in which surfaces of the lid and the exterior film which face each other are sealed, the lid includes a first surface on the electrode assembly side, and a second surface opposite to the first surface, the method for manufacturing the electrical storage device includes a sealing step of forming the second sealed portion using a seal bar, and in the sealing step, a sealing temperature for a portion including a boundary between the first surface and the exterior film is lower than a sealing temperature for a portion including a boundary between the second surface and the exterior film.

### Advantageous Effects of Invention

According to the electrical storage device, the lid, and the method for manufacturing an electrical storage device according to the present invention, a state in which an electrode assembly is sealed by an outer packaging is suitably maintained. Brief Description of Drawings

[Fig. 1] Fig. 1 is a perspective view of an electrical storage device according to a first embodiment.
[Fig. 2] Fig. 2 is a sectional view showing a layer configuration of an exterior film of the electrical storage device of Fig. 1.
[Fig. 3] Fig. 3 is a view in which the exterior film of the electrical storage device of Fig. 1 is unfolded.
[Fig. 4] Fig. 4 is a front view of a lid of the electrical storage device of Fig. 1.
[Fig. 5] Fig. 5 is a side view of the lid of Fig. 4.
[Fig. 6] Fig. 6 is a flowchart showing an example of a manufacturing process of the electrical storage device of Fig. 1.
[Fig. 7] Fig. 7 is a sectional view of an electrical storage device according to a second embodiment which is viewed from a lateral surface of a second sealed portion.
[Fig. 8] Fig. 8 is a sectional view of the electrical storage device of Fig. 7 which is viewed from the electrode assembly side.
[Fig. 9] Fig. 9 is a view of the electrical storage device of Fig. 7 which is viewed from a side opposite to the electrode assembly.
[Fig. 10] Fig. 10 is a perspective view of an example of a lid of the electrical storage device of Fig. 7.
[Fig. 11] Fig. 11 is a perspective view of another example of the lid of the electrical storage device of Fig. 7.
[Fig. 12] Fig. 12 is a perspective view of still another example of the lid of the electrical storage device of Fig. 7.
[Fig. 13] Fig. 13 is a sectional view showing an example of a sealing step in a method for manufacturing the electrical storage device of Fig. 7.
[Fig. 14] Fig. 14 is a side view of a lid of an electrical storage device of a modification of the first embodiment.
[Fig. 15] Fig. 15 is a front view of a lid of an electrical storage device of another modification of the first embodiment.
[Fig. 16] Fig. 16 is a side view of a lid of an electrical storage device of a modification of the second embodiment.
[Fig. 17] Fig. 17 is a side view of a lid of an electrical storage device of another modification of the second embodiment.
[Fig. 18] Fig. 18 is a sectional view of an electrical storage device according to another modification of the second embodiment which is viewed from a lateral surface of a second sealed portion.
[Fig. 19] Fig. 19 is a front view of the lid of Fig. 18 to which an adhesive film is bonded.
[Fig. 20] Fig. 20 is a table showing results of a first test.
[Fig. 21] Fig. 21 is a table showing results of a second test.

### Description of Embodiments

Hereinafter, an electrical storage device according to an embodiment of the present invention will be described with reference to the drawings. In this specification, a numerical range indicated by the term "A to B" means "A or more" and "B or less". For example, the expression of "2 to 15 mm" means 2 mm or more and 15 mm or less.

### [1. FIRST EMBODIMENT]

### <1-1. Configuration of electrical storage device>

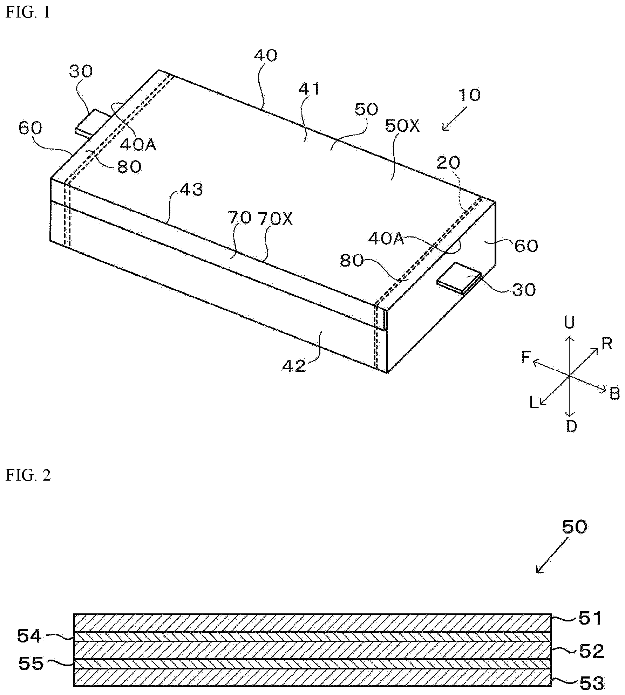

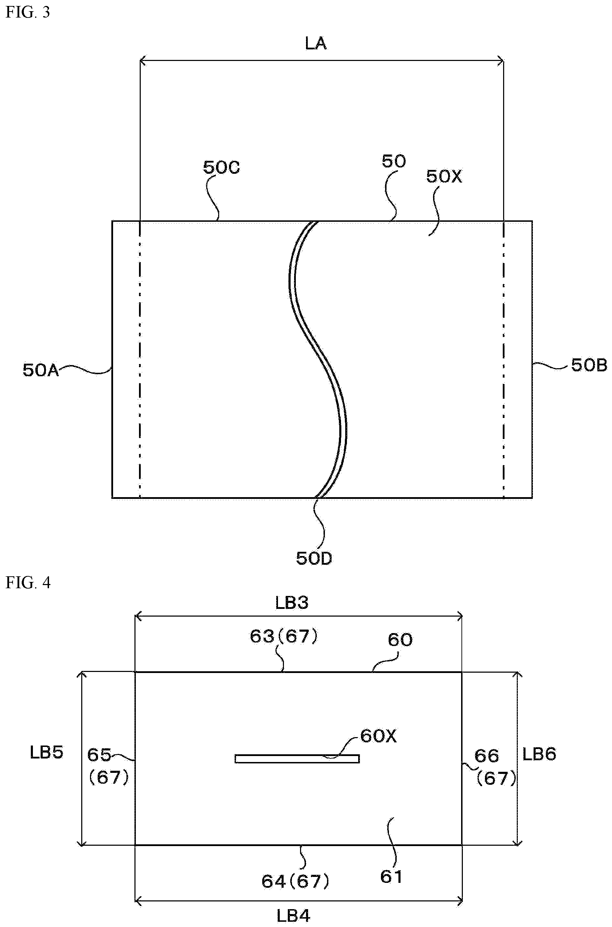

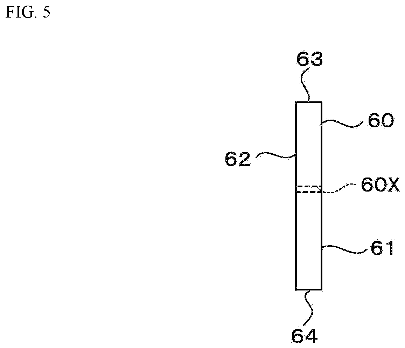

Fig. 1 is a plan view schematically showing an electrical storage device 10 according to a first embodiment. Fig. 2 is a sectional view showing a layer configuration of an exterior film 50 of the electrical storage device 10 of Fig. 1. Fig. 3 is a view in which the exterior film 50 of the electrical storage device 10 of Fig. 1 is unfolded. Fig. 4 is a front view of a lid 60 of the electrical storage device 10 of Fig. 1. Fig. 5 is a side view of the lid 60 of Fig. 4. In Fig. 1, the direction along arrow UD indicates a thickness direction of the electrical storage device 10, the direction along arrow LR indicates a width direction of the electrical storage device 10, and the direction along arrow FB indicates a depth direction of the electrical storage device 10.

The electrical storage device 10 includes an electrode assembly 20, an electrode terminal 30, and an outer packaging 40. The electrode assembly 20 includes, for example, a lithium ion battery, a capacitor, a lithium ion polymer battery, an all-solid-state battery, a semi-solid-state battery, a pseudo-solid-state battery, a polymer battery, an all-polymer battery, a lead storage battery, a nickel-hydrogen storage battery, a nickel-cadmium storage battery, a nickel-iron storage battery, a nickel-zinc storage battery, a silver oxide-zinc storage battery, a metal-air battery, a polyvalent cation battery, or electrodes (positive electrode and negative electrode) forming an electrical storage member such as a capacitor, and a separator. In the present embodiment, the shape of the electrode assembly 20 is a cuboid. Note that the "substantially cuboid" includes a perfect cuboid, and for example, a solid that can be seen as a cuboid by modifying the shape of a part of the outer surface thereof. The shape of the electrode assembly 20 may be, for example, a cylinder or a polygonal column.

In the present embodiment, the electrical storage device 10 includes two electrode terminals 30. The electrode terminal 30 is a metal terminal for use in input and output of electrical power in the electrode assembly 20. One end part of the electrode terminal 30 is electrically connected to an electrode (positive electrode or negative electrode) in the electrode assembly 20. The other end part of the electrode terminal 30 protrudes outward from an end edge of the outer packaging 40, for example. The electrode terminal 30 is only required to enable input and output of electrical power in the electrode assembly 20, and is not required to protrude from the outer packaging 40, for example. When the lid 60 described later is made from, for example, metal, the lid 60 may also function as the electrode terminal 30. In this case, the lid 60 having a function as an electrode terminal may, or is not required to, protrude from the outer packaging 40.

The metal material for forming the electrode terminal 30 is, for example, aluminum, nickel, copper or the like. For example, when the electrode assembly 20 is a lithium ion battery, the electrode terminal 30 connected to the positive electrode is typically made from aluminum or the like, and the electrode terminal 30 connected to the negative electrode is typically made from copper, nickel or the like. The outermost layer of the electrode assembly 20 is not necessarily an electrode, and may be, for example, a protective tape or a separator.

The outer packaging 40 seals the electrode assembly 20. The outer packaging 40 includes the exterior film 50 and the lid 60. The exterior film 50 is wound around the electrode assembly 20 so as to have an opening 40A, and the lid 60 is disposed on the side of the electrode assembly 20 so as to close the opening 40A.

For example, there is a method in which a housing portion (recess) for housing the electrode assembly 20 is formed in the exterior film 50 through cold molding. However, it is not always easy to form a deep housing portion by such a method. If an attempt is made to form a deep (for example, 15 mm in terms of molding depth) housing portion (recess) by cold molding, pinholes or cracks are generated in the exterior film 50, leading to a rise in possibility that battery performance is deteriorated. On the other hand, since the outer packaging 40 seals the electrode assembly 20 by winding the exterior film 50 around the electrode assembly 20, the electrode assembly 20 can be easily sealed regardless of the thickness of the electrode assembly 20. For reducing a dead space between the electrode assembly 20 and the exterior film 50 in order to improve the volume energy density of the electrical storage device 10, it is preferable that the exterior film 50 is wound in a state of being in contact with the outer surface of the electrode assembly 20. In an all-solid-state battery, it is necessary to eliminate the space between the electrode assembly 20 and the exterior film 50 from the viewpoint that it is necessary to uniformly apply a high pressure from the outer surface of the battery for exhibiting battery performance, and therefore, it is preferable that the exterior film 50 is wound in a state of being in contact with the outer surface of the electrode assembly 20.

The exterior film 50 is, for example, a laminate (laminate film) including a base material layer 51, a barrier layer 52 and a heat-sealable resin layer 53 in the stated order. The exterior film 50 is not required to include all these layers, and may be free of, for example, the barrier layer 52. That is, the exterior film 50 is only required to be made from a material that is flexible and easy to bend, and the exterior film 50 may be made from, for example, a resin film. The exterior film 50 is preferably heat-sealable.

The base material layer 51 in the exterior film 50 is a layer for imparting heat resistance to the exterior film 50 to suppress generation of pinholes which may occur during processing or distribution. The base material layer 51 includes, for example, at least one of a stretched polyester resin layer and a stretched polyamide resin layer. For example, when the base material layer 51 includes at least one of a stretched polyester resin layer and a stretched polyamide resin layer, the barrier layer 52 can be protected during processing of the exterior film 50 to suppress breakage of the exterior film 50. From the viewpoint of increasing the tensile elongation of the exterior film 50, the stretched polyester resin layer is preferably a biaxially stretched polyester resin layer, and the stretched polyamide resin layer is preferably a biaxially stretched polyamide resin layer. Further, from the viewpoint of excellent piercing strength or impact strength, the stretched polyester resin layer is more preferably a biaxially stretched polyethylene terephthalate (PET) film, and the stretched polyamide resin layer is more preferably a biaxially stretched nylon (ONy) film. The base material layer 51 may include both a stretched polyester resin layer and a stretched polyamide resin layer. From the viewpoint of film strength, the thickness of the base material layer 51 is, for example, preferably 5 to 300 µm, more preferably 20 to 150 µm.

The barrier layer 52 is joined to, for example, the base material layer 51 with an adhesive layer 54 interposed therebetween. The barrier layer 52 in the exterior film 50 is made from, for example, an aluminum foil from the viewpoint of moisture resistance, processability such as extensibility, and cost. The aluminum foil preferably contains iron from the viewpoint of suitability for packaging in packaging of the electrode assembly 20, and pinhole resistance. The content of iron in the aluminum alloy foil is preferably 0.5 to 5.0 mass%, more preferably 0.7 to 2.0 mass%. When the content of iron is 0.5 mass% or more, the exterior film 50 has suitability for packaging, excellent pinhole resistance and extensibility. When the content of iron is 5.0 mass% or less, the exterior film 50 has excellent flexibility. The barrier layer 52 may include a metal foil having barrier properties, a deposited film, and a resin layer. Examples of the metal foil include an aluminum alloys, stainless steel, titanium steel, and steel plates.

From the viewpoint of barrier properties, pinhole resistance and suitability for packaging, the thickness of the barrier layer 52 is, for example, preferably 15 to 100 µm, more preferably 30 to 80 µm. When the thickness of the barrier layer 52 is 15 µm or more, the exterior film 50 is less likely to be broken even if stress is applied by packaging processing. When the thickness of the barrier layer 52 is 100 µm or less, an increase in mass of the exterior film 50 can be reduced, and a decrease in weight energy density of the electrical storage device 10 can be suppressed.

When the barrier layer 52 is an aluminum foil, it is preferable that a corrosion-resistant film is provided at least on a surface on a side opposite to the base material layer 51 for prevention of dissolution and corrosion, and the like. The barrier layer 52 may include a corrosion-resistant film on each of both surfaces. Here, the corrosion-resistant film refers to a thin film obtained by subjecting the surface of the barrier layer 52 to, for example, hydrothermal denaturation treatment such as boehmite treatment, chemical conversion treatment, anodization treatment, plating treatment with nickel, chromium or the like, or corrosion prevention treatment by applying a coating agent to impart corrosion resistance (for example, acid resistance and alkali resistance) to the barrier layer 52. Specifically, the corrosion-resistant film means a film which improves the acid resistance of the barrier layer 52 (acid-resistant film), a film which improves the alkali resistance of the barrier layer 52 (alkali-resistant film), or the like. One of treatments for forming the corrosion-resistant film may be performed, or two or more thereof may be performed in combination. In addition, not only one layer but also multiple layers can be formed. Further, of these treatments, the hydrothermal denaturation treatment and the anodization treatment are treatments in which the surface of the metal foil is dissolved with a treatment agent to form a metal compound excellent in corrosion resistance. The definition of the chemical conversion treatment may include these treatments. When the barrier layer 52 is provided with the corrosion-resistant film, the barrier layer 52 is regarded as including the corrosion-resistant film.

The corrosion-resistant film exhibits the effects of preventing delamination between the barrier layer 52 (e.g. an aluminum alloy foil) and the base material layer 51 during molding of the exterior film 50; preventing dissolution and corrosion of the surface of the barrier layer 52, particularly dissolution and corrosion of aluminum oxide present on the surface of the barrier layer 52 when the barrier layer 52 is an aluminum alloy foil, by hydrogen fluoride generated by reaction of an electrolyte with moisture; improving the bondability (wettability) of the surface of the barrier layer 52; preventing delamination between the base material layer 51 and the barrier layer 52 during heat-sealing; and preventing delamination between the base material layer 51 and the barrier layer 52 during molding.

The heat-sealable resin layer 53 is joined to, for example, the barrier layer 52 with an adhesive layer 55 interposed therebetween. The heat-sealable resin layer 53 in the exterior film 50 is a layer that imparts a heat sealing property to the exterior film 50 by heat sealing. Examples of the heat-sealable resin layer 53 include resin films formed of a polyester-based resin such as a polyethylene terephthalate-based resin or a polybutylene terephthalate-based resin, a polyolefin-based resin such as a polyethylene-based resin or a polypropylene-based resin, or an acid-modified polyolefin-based resin obtained by graft-modifying the polyolefin-based resin with an acid such as maleic anhydride. From the viewpoint of sealability and strength, the thickness of the heat-sealable resin layer 53 is, for example, preferably 20 to 300 µm, more preferably 40 to 150 µm.

The exterior film 50 preferably includes one or more layers having a buffer function (hereinafter, referred to as "buffer layers") outside the heat-sealable resin layer 53, more preferably outside the barrier layer 52. The buffer layer may be laminated outside the base material layer 51, and the base material layer 51 may also function as a buffer layer. When the exterior film 50 includes a plurality of buffer layers, the buffer layers may lie side-by-side, or may be laminated with the base material layer 51, the barrier layer 52 or the like interposed between the buffer layers.

A material for forming the buffer layer can be arbitrarily selected from materials having a cushioning property. The material having a cushioning property is, for example, rubber, a nonwoven fabric, or a foamed sheet. The rubber is, for example, natural rubber, fluororubber, or silicon rubber. The rubber hardness is preferably about 20 to 90. The material for forming a nonwoven fabric is preferably a material having excellent heat resistance. When the buffer layer is made from a nonwoven fabric, the lower limit of the thickness of the buffer layer is preferably 100 µm, more preferably 200 µm, still more preferably 1,000 µm. When the buffer layer is made from a nonwoven fabric, the upper limit of the thickness of the buffer layer is preferably 5,000 µm, more preferably 3,000 µm. The thickness of the buffer layer is preferably in the range of 100 µm to 5,000 µm, 100 µm to 3,000 µm, 200 µm to 5,000 µm, 200 µm to 3,000 µm, 1,000 µm to 5,000 µm, or 1,000 µm to 3,000 µm. The thickness of the buffer layer is most preferably in the range of 1,000 µm to 3,000 µm.

When the buffer layer is made from rubber, the lower limit of the thickness of the buffer layer is preferably 0.5 mm. When the buffer layer is made from rubber, the upper limit of the thickness of the buffer layer is preferably 10 mm, more preferably 5 mm, still more preferably 2 mm. When the buffer layer is made from rubber, the thickness of the buffer layer is in the range of 0.5 mm to 10 mm, 0.5 mm to 5 mm, or 0.5 mm to 2 mm.

When the exterior film 50 includes a buffer layer, the buffer layer functions as a cushion, so that the exterior film 50 is prevented from being damaged by the impact of falling of the electrical storage device 10 or handling during manufacturing of the electrical storage device 10.

The lid 60 has, for example, a cuboid shape, and is made from, for example, a resin material. The lid 60 may be formed by, for example, cold-molding the exterior film 50, or may be a metal molded article. The lid 60 includes a first surface 61, a second surface 62, a third surface 63, a fourth surface 64, a fifth surface 65, and a sixth surface 66. The first surface 61 faces the electrode assembly 20. The second surface 62 is a surface on a side opposite to the first surface 61. The third surface 63 forms an upper surface of the lid 60. The fourth surface 64 forms a lower surface of the lid 60. The fifth surface 65 and the sixth surface 66 form a lateral surface of the lid 60. The third surface 63, the fourth surface 64, the fifth surface 65 and the sixth surface 66 are lid seal surfaces that are heat-sealed to the heat-sealable resin layer 53 of the exterior film 50. Hereinafter, the third to sixth surfaces 63 to 66 may be collectively referred to as a lid seal surface 67.

From the viewpoint of suitably heat-sealing the lid 60 and the exterior film 50, the main components of materials for forming the lid 60 and materials for forming the heat-sealable resin layer 53 of the exterior film 50 are preferably the same. In the present embodiment, polypropropylene is a main component of materials for forming the lid 60 and materials for forming the heat-sealable resin layer 53. Note that the main component refers to, for example, a material that accounts for 50% or more of the materials contained in a constituent element.

In the present embodiment, a through-hole 60X into which the electrode terminal 30 is inserted is formed in the lid 60. The through-hole 60X extends through the first surface 61 and the second surface 62. In a state where the electrode assembly 20 is housed, the electrode terminal 30 protrudes to the outside of the outer packaging 40 by passing through the through-hole 60X formed in the lid 60. A small gap between the through-hole 60X of the lid 60 and the electrode terminal 30 is filled with, for example, resin. In the electrical storage device 10, the location at which the electrode terminal 30 protrudes to the outside can be arbitrarily selected. For example, the electrode terminal 30 may protrude to the outside from a hole formed in one of the six surfaces of the outer packaging 40. In this case, a small gap between the outer packaging 40 and the electrode terminal 30 is filled with, for example, a resin. In the electrical storage device 10, the lid 60 and the electrode terminal 30 are provided separately, but the lid 60 and the electrode terminal 30 may be integrally formed. When the electrode terminal 30 does not protrude from the end edge of the outer packaging 40, the through-hole 60X is not required to be formed in the lid 60.

In the present embodiment, with the exterior film 50 wound around the electrode assembly 20 so as to have the opening 40A, surfaces of the exterior film 50 which face each other (heat-sealable resin layer 53) are heat-sealed to form a first sealed portion 70.

The first sealed portion 70 is formed by heat-sealing a portion including a first edge 50A and a portion including a second edge 50B in the exterior film 50 shown in Fig. 3. The first sealed portion 70 extends in a longitudinal direction of the outer packaging 40. In the outer packaging 40, a location at which the first sealed portion 70 is formed can be arbitrarily selected. In the present embodiment, a root 70X of the first sealed portion 70 is located on a side 43 of a boundary between the first surface 41 and the second surface 42 of the outer packaging 40. The first surface 41 has a larger area over the second surface 42. The root 70X of the first sealed portion 70 may be located on an arbitrary surface of the outer packaging 40. In the present embodiment, for example, the first sealed portion 70 is folded toward the second surface 42 of the outer packaging 40. The first sealed portion 70 may protrude outward with respect to the electrode assembly 20 in plan view, or may be folded toward the first surface 41.

In the present embodiment, a second sealed portion 80 is formed by heat-sealing the heat-sealable resin layer 53 of the exterior film 50 and the lid seal surface 67 of the lid 60. Hereinafter, the sealing strength between the heat-sealable resin layer 53 of the exterior film 50 and the lid seal surface 67 of the lid 60 may be referred to as sealing strength of the second sealed portion 80. The sealing strength of the second sealed portion 80 is the sealing strength between the heat-sealable resin layer 53 and the lid 60 in the long-side portion of the lid seal surface 67, that is, the lid seal surface 67 extending in the LR (width) direction in Fig. 1. The exterior film 50 is in the UD (vertical) direction in Fig. 1 with respect to the lid 60, and the sealing strength of the second sealed portion 80 is measured on the basis of a distance of the second sealed portion 80 in the FB (depth) direction. The sealing strength of the second sealed portion 80 of the lid 60 divided into a plurality of parts including long sides and short sides is the sealing strength at the long-side portion of the lid seal surface 67 of the plurality of parts.

From the viewpoint of suitably maintaining the state in which the electrode assembly 20 is sealed with the outer packaging 40, the sealing strength of the second sealed portion 80 is preferably 40 N/15 mm or more, more preferably 50 N/15 mm or more, still more preferably 60 N/15 mm or more, still more preferably 70 N/15 mm or more, still more preferably 85 N/15 mm or more. When the sealing strength of the second sealed portion 80 is 40 N/15 mm or more, a state in which the electrode assembly 20 is sealed with the outer packaging 40 is suitably maintained even if the electrical storage device 10 is used for, for example, several years (less than 10 years). When the sealing strength of the second sealed portion 80 is 85 N/15 mm or more, a state in which the electrode assembly 20 is sealed with the outer packaging 40 is suitably maintained even if the electrical storage device 10 is used for, for example, 10 years or more. The sealing strength of the second sealed portion 80 is preferably 150 N/15 mm or less. The sealing strength of the second sealed portion 80 is preferably in the range of 40 N/15 mm to 150 N/15 mm, 50 N/15 mm to 150 N/15 mm, 60 N/15 mm to 150 N/15 mm, 70 N/15 mm to 150 N/15 mm, or 85 N/15 mm to 150 N/15 mm.

As shown in Fig. 3, the exterior film 50 includes a lid wrapping portion 50X that is heat-sealed to the lid seal surface 67 of lid 60 in the second sealed portion 80. In the exterior film 50, a predetermined area including the first edge 50A from which the lid wrapping portion 50X is excluded and a predetermined area including the second edge 50B form the first sealed portion 70.

In the all-solid-state battery disclosed in PTL 1, depending on the length of the exterior film, wrinkles may be generated in the outer packaging when the exterior film and the outer peripheral surface of the lid are heat-sealed. Therefore, one of objects of the present embodiment is to provide the electrical storage device 10 which is unlikely to undergo generation of wrinkles in the outer packaging 40.

In the present embodiment, the length LA of the lid wrapping portion 50X and the length LBX of the lid seal surface 67 are set to suppress generation of wrinkles in the outer packaging 40 in formation of the second sealed portion 80 in the outer packaging 40. The length LBX of the lid seal surface 67 is a sum of the length LB3 of the third surface 63, the length LB4 of the fourth surface 64, the length LB5 of the fifth surface 65 and the length LB6 of the sixth surface 66 which are shown in Fig. 4. In the present embodiment, a ratio of the length LA to the length LBX, RA is preferably 103% or less. Since the difference between the length LA and the length LBX is small, the exterior film 50 is unlikely to sag. This suppresses generation of wrinkles in the outer packaging 40 in formation of the second sealed portion 80 in the outer packaging 40. The lower limit value of the ratio RA is a value when the length LA and the length LBX are equal to each other, that is, 100%.

In the electrical storage device 10, sealing may be performed in such a manner as to collapse the corners of the lid 60 after formation of the second sealed portion 80 for improving resin filling between the corners of the lid 60 and the exterior film 50. In this case, each of the length LA and the length LBX is a length before the corners of the lid 60 are collapsed.

### <1-2. Method for manufacturing electrical storage device>

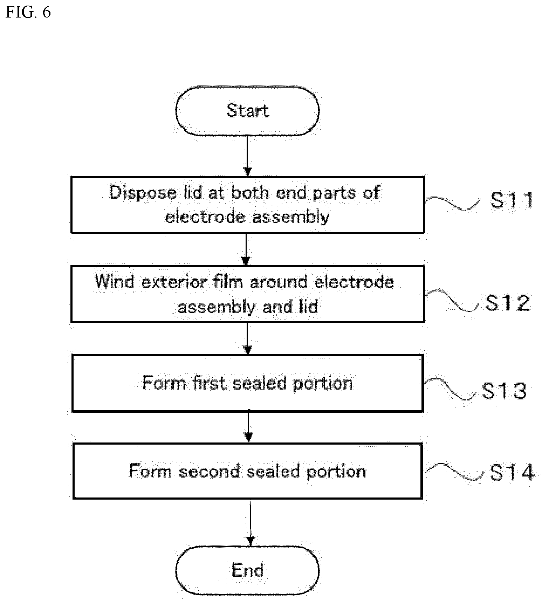

Fig. 6 is a flowchart showing an example of a method for manufacturing the electrical storage device 10. The method for manufacturing the electrical storage device 10 includes, for example, a first step, a second step, a third step and a fourth step. The first to fourth steps are carried out by, for example, an apparatus for manufacturing the electrical storage device 10.

In the first step in step S11, the manufacturing apparatus disposes the lid 60 with the electrode terminal 30 attached to both end parts of the electrode assembly 20. When the first step is completed, the electrode terminal 30 and the electrode of the electrode assembly 20 are electrically connected.

The second step in step S12 is carried out after the first step. In the second step, the manufacturing apparatus winds the exterior film 50 around the electrode assembly 20 and the lid 60.

The third step in step S13 is carried out after the second step. In the third step, the manufacturing apparatus forms the first sealed portion 70 by heat-sealing the heat-sealable resin layer 53 of a portion including the first edge 50A in the exterior film 50 and the heat-sealable resin layer 53 of a portion including the second edge 50B in the exterior film 50.

The fourth step in step S14 is carried out after the third step. The manufacturing apparatus forms the second sealed portion 80 by heat-sealing the exterior film 50 and the lid 60.

### <1-3. Action and effect of electrical storage device>

In the electrical storage device 10, the exterior film 50 and the lid 60 are firmly joined to each other because the sealing strength of the second sealed portion 80 is 40 N/15 mm or more. This suitably maintains a state in which the electrode assembly 20 is sealed by the outer packaging 40.

In the electrical storage device 10, wrinkles are unlikely to be generated in the outer packaging 40 because the ratio RA is 103% or less.

### [2. SECOND EMBODIMENT]

An electrical storage device 200 according to a second embodiment has the same configuration as in the first embodiment except that a resin lump is formed in a second sealed portion 80. Hereinafter, the electrical storage device 200 according to the second embodiment will be described mainly for portions different from those in the first embodiment.

### <2-1. Configuration of electrical storage device>

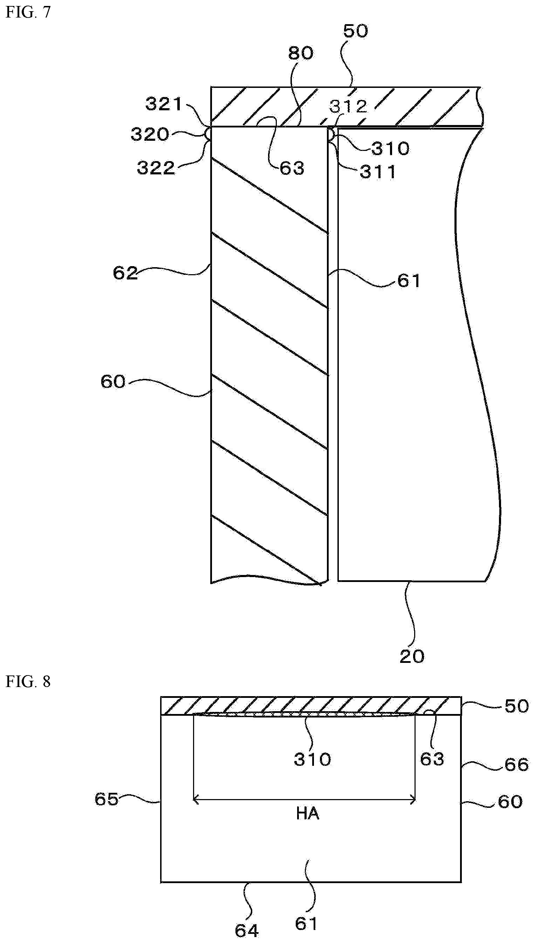

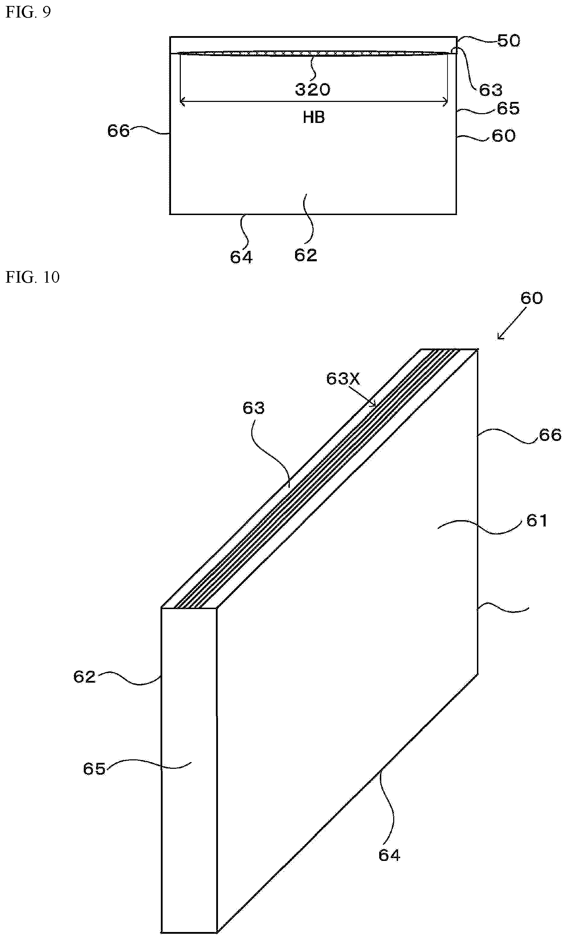

Fig. 7 is a sectional view of the electrical storage device 200 according to the second embodiment which is viewed from a lateral surface of the second sealed portion 80. Fig. 8 is a sectional view of the second sealed portion 80 viewed from the electrode assembly 20 side. Fig. 9 is a view of the second sealed portion 80 viewed from a side opposite to the electrode assembly 20. The electrical storage device 200 includes an inner resin lump 310 and an outer resin lump 320. In Figs. 8 and 9, a through-hole 60X is not shown.

As shown in Fig. 8, the inner resin lump 310 is formed between a first surface 61 of a lid 60 and an exterior film 50, more specifically, at a boundary between the first surface 61 and the exterior film 50. The inner resin lump 310 is a portion in which resin materials forming a heat-sealable resin layer 53 of the exterior film 50 and the lid 60 protrude toward the electrode assembly 20. For example, the inner resin lump 310 is formed along a longitudinal direction of the lid 60 at a boundary between the first surface 61 of the lid 60 and the exterior film 50. In the longitudinal direction of the lid 60, a region where the inner resin lump 310 is formed has a length HA. The inner resin lump 310 may be interruptedly formed along the longitudinal direction of the lid 60 at the boundary between the first surface 61 of the lid 60 and the exterior film 50.

In this case, the length HA is a sum of the lengths of all inner resin lumps 310 in the longitudinal direction of the lid 60.

The outer resin lump 320 is formed between a second surface 62 of the lid 60 and the exterior film 50, more specifically, at a boundary between the second surface 62 and the exterior film 50. The outer resin lump 320 is a portion in which resin materials forming the heat-sealable resin layer 53 of the exterior film 50 and the lid 60 protrude toward a side opposite to the electrode assembly 20. For example, the outer resin lump 310 is formed along a longitudinal direction of the lid 60 at a boundary between the second surface 62 of the lid 60 and the exterior film 50. In the longitudinal direction of the lid 60, a region where the outer resin lump 320 is formed has a length HB. The outer resin lump 320 may be interruptedly formed along the longitudinal direction of the lid 60 at the boundary between the second surface 62 of the lid 60 and the exterior film 50. In this case, the length HB is a sum of the lengths of all outer resin lumps 320 in the longitudinal direction of the lid 60.

The inner resin lump 310 has end points 311 and 312. The outer resin lump 320 has end points 321 and 322. If the inner resin lump 310 and the outer resin lump 320 are formed in the electrical storage device 200, cracks are likely to be generated in the heat-sealable resin layer 53 of the exterior film 50 with the end points 311, 312, 321 and 322 as origination points. Therefore, the peeling strength (sealing strength) is more likely to decrease as compared to a case where a resin lump is not formed. When the electrical storage device 200 is used, gas is generated from the electrode assembly 20, so that the outer packaging 40 expands. If the outer packaging 40 expands, a force to peel the exterior film 50 from the lid 60 acts from a side close to the electrode assembly 20. To address this, in the present embodiment, the length HA is made smaller than the length HB so that the sealing strength at and around the boundary between the first surface 61 of the lid 60 and the exterior film 50 is higher than the sealing strength at and around the boundary between the second surface 62 of the lid 60 and the exterior film 50. A specific configuration for making the length HA smaller than the length HB can be achieved by, for example, changing the shape of the lid seal surface 67 of the lid 60.

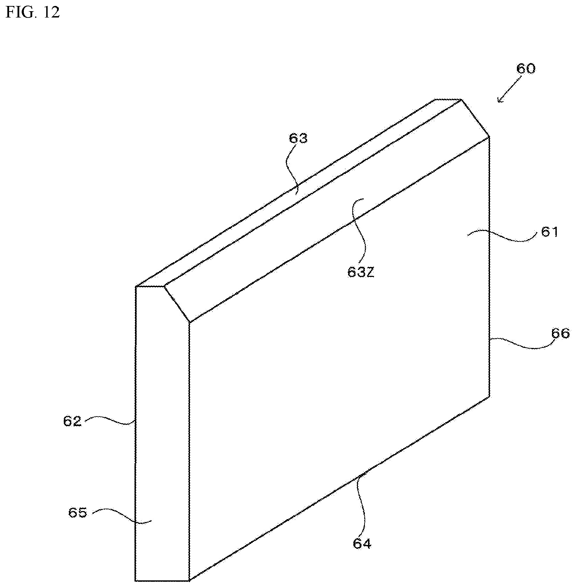

The length HA can be made smaller than the length HB by, for example, forming, on the third surface 63 of the lid 60, a plurality of streak-shaped slits 63X extending along the longitudinal direction of the lid 60 as shown in Fig. 10. The number of slits 63X formed on the third surface 63 can be arbitrarily selected. In Figs. 10 and 12, the through-hole 60X is not shown.

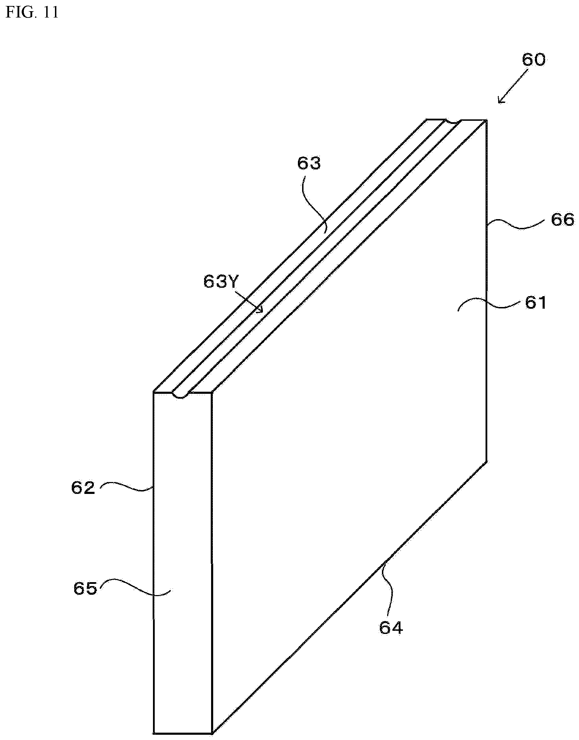

The length HA can be made smaller than the length HB by, for example, forming, on the third surface 63 of the lid 60, grooves 63Y extending along the longitudinal direction of the lid 60 as shown in Fig. 11. The number of grooves 63Y formed on the third surface 63 can be arbitrarily selected.

The length HA can be made smaller than the length HB by, for example, forming, on a part of the third surface 63 of the lid 60, a sloping surface 63Z that slopes so as to approach a center of the lid 60 in a height direction as the first surface 61 is approached from the second surface 62 as shown in Fig. 12.

It is also possible to make the length HA smaller than the length HB by, for example, modifying the step of forming the second sealed portion 80 (sealing step) in a method for manufacturing the electrical storage device 200.

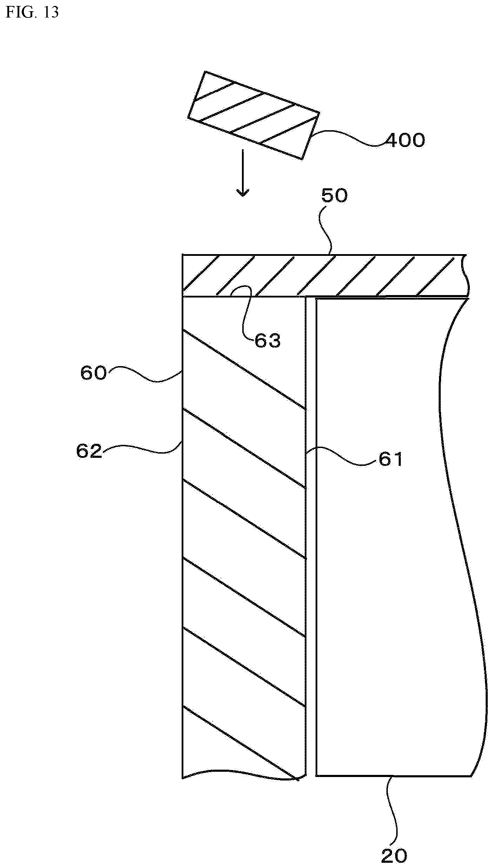

For example, in the sealing step, the second sealed portion 80 is formed by performing heat sealing with a seal bar 400 sloped so as to draw closer to the boundary between the first surface 61 and the exterior film 50 than to the boundary between the second surface 62 and the exterior film 50 as shown in Fig. 13, whereby the length HA can be made smaller than the length HB.

In another example, in the sealing step, the sealing temperature TA for a portion including the boundary between the first surface 61 and the exterior film 50 is made lower than the sealing temperature TB for a portion including the boundary between the second surface 62 and the exterior film 50, whereby the length HA can be made smaller than the length HB. In this example, the sealing temperatures TA and TB may be changed with one seal bar, or the sealing temperatures TA and TB may be changed with different seal bars.

### <2-2. Action and effect of electrical storage device>

In the electrical storage device 200, the sealing strength at and around the boundary between the first surface 61 of the lid 60 and the exterior film 50 is higher than the sealing strength at and around the boundary between the second surface 62 of the lid 60 and the exterior film 50 because the length HA is smaller than the length HB. Therefore, by using the electrical storage device 200, the exterior film 50 is inhibited from peeling from the lid 60 on the electrode assembly 20 side even if the outer packaging 40 expands.

### <3. Modifications>

The above-described embodiments are an example of possible forms of an electrical storage device, a lid and a method for manufacturing an electrical storage device according to the present invention, and are not intended to limit the forms thereof. The electrical storage device, the lid and the method for manufacturing an electrical storage device according to the present invention may have a form different from that exemplified in each of the embodiment. An example thereof is a form in which a part of the configuration of any of the embodiments is replaced, changed or omitted, or a form in which a new configuration is added to any of the embodiments. Some examples of modifications of the embodiments will be described below. Note that the following modifications can be combined as long as they are not technically contradictory.

### <3-1>

In electrical storage device 10 according to the first embodiment and the electrical storage device 200 according to the second embodiment, a location at which the electrode terminal 30 is disposed can be arbitrarily selected. For example, the electrode terminal 30 may protrude from the first sealed portion 70.

### <3 -2>

In the electrical storage device 10 according to the first embodiment, the inner resin lump 310 and the outer resin lump 320 may be formed as in the second embodiment. In this modification, the length LA of the inner resin lump 310 and the length LB of the outer resin lump 320 may be equal to each other. In this case, the ratio of the thickness MB of the resin lump 310 to the thickness MA of the heat-sealable resin layer 53, RB is preferably 200% or less from the viewpoint of inhibiting the exterior film 50 from peeling from the lid 60 on the electrode assembly 20 even if the outer packaging 40 expands. The thickness MB of the inner resin lump 310 is, for example, a length from the first surface 61 of the lid 60 to the top of the inner resin lump 310.

### <3-3>

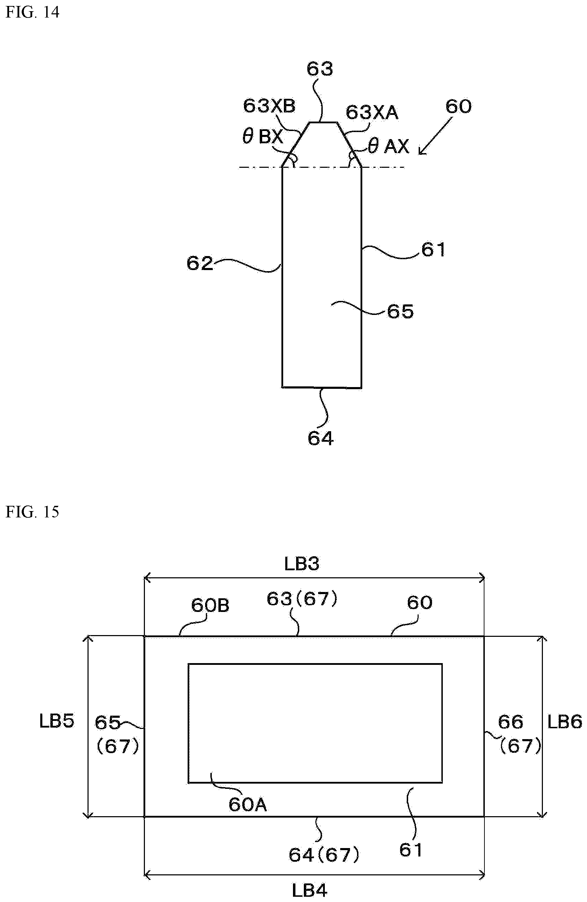

In the electrical storage device 10 according to the first embodiment, the shape of the lid seal surface 67 of the lid 60 can be arbitrarily changed. For example, as shown in Fig. 14, a sloping surface 63XA and a sloping surface 63XB may be formed on a part of the third surface 63 of the lid 60. The sloping surface 63XA slopes so as to approach the center of the lid 60 in the height direction as the first surface 61 is approached from the second surface 62. The sloping surface 63XB slopes so as to approach the center of the lid 60 in the height direction as the second surface 62 is approached from the first surface 61. The slope angle θAX of the sloping surface 63XA with respect to the fourth surface 64 and the slope angle θBX of the sloping surface 63XB with respect to the fourth surface 64 are equal to each other. In this modification, when a resin lump is formed in the electrical storage device 10, the length LA of the inner resin lump 310 and the length LB of the outer resin lump 320 are substantially equal to each other.

### <3 -4>

In the electrical storage device 10 according to the first embodiment, the configuration of the lid 60 can be arbitrarily changed. As shown in Fig. 15, the lid 60 may include a lid main body 60A, and a frame 60B that covers the lid main body 60A. In this modification, for example, the material for forming the lid main body 60A is a metal. The material for forming the frame 60B is, for example, a resin that can be suitably sealed to the heat-sealable resin layer 53 of exterior film 50. In this modification, the third to sixth surfaces 63 to 66 of the lid 60, i.e., the lid seal surface 67, are formed on the frame 60B. Even in this modification, the ratio of the length LA to the length LBX, RA is preferably 103% or less.

### <3-5>

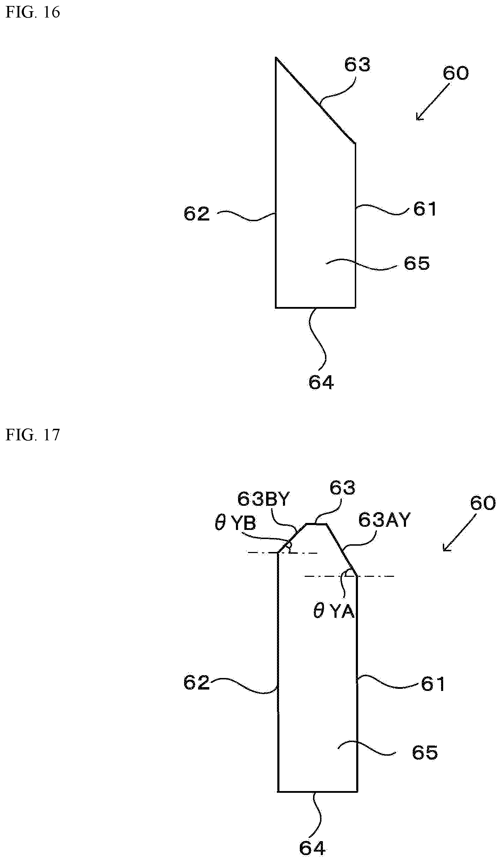

In the electrical storage device 200 according to the second embodiment, the shape of the lid 60 can be arbitrarily changed. For example, as shown in Fig. 16, the third surface 63 as a whole may be a sloping surface that slopes so as to approach the center of the lid 60 in the height direction as the first surface 61 is approached from the second surface 62. In this modification, when a resin lump is formed in the electrical storage device 10, the length LA of the inner resin lump 310 is smaller than the length LB of the outer resin lump 320, and therefore the same effect as the electrical storage device 200 according to the second embodiment can be obtained.

As shown in Fig. 17, a sloping surface 63YA and a sloping surface 63YB may be formed on a part of the third surface 63 of the lid 60. The sloping surface 63YA slopes so as to approach the center of the lid 60 in the height direction as the first surface 61 is approached from the second surface 62. The sloping surface 63YB slopes so as to approach the center of the lid 60 in the height direction as the second surface 62 is approached from the first surface 61. The slope angle θAY of the sloping surface 63YA with respect to the fourth surface 64 and the slope angle θBY of the sloping surface 63YB with respect to the fourth surface 64 are equal to each other. In this modification, when a resin lump is formed in the electrical storage device 10, the length LA of the inner resin lump 310 is smaller than the length LB of the outer resin lump 320, and therefore the same effect as the electrical storage device 200 according to the second embodiment can be obtained.

### <3 -6>

For suitably bonding the exterior film 50 and the lid 60, the electrical storage device 10 according to the first embodiment and the electrical storage device 200 according to the second embodiment may include an adhesive film 500 disposed between the exterior film 50 and the lid 60. In this modification, for example, the second sealed portion 80 is formed after the lid 60 to which the adhesive film 500 is bonded is attached to the opening 40A at both ends of the outer packaging 40.

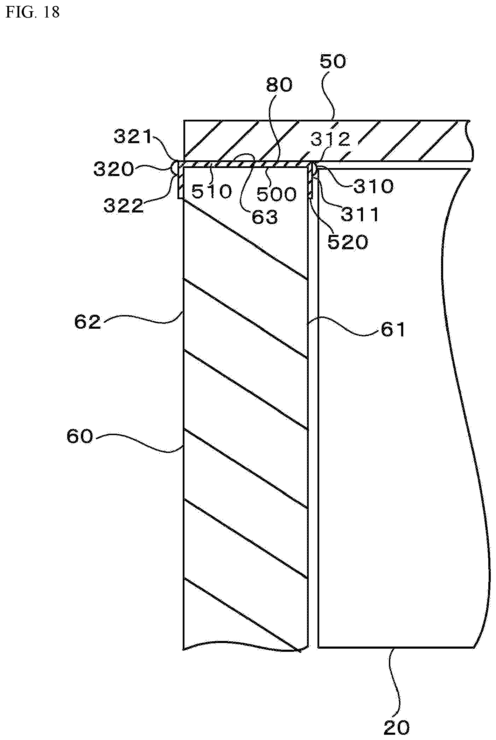

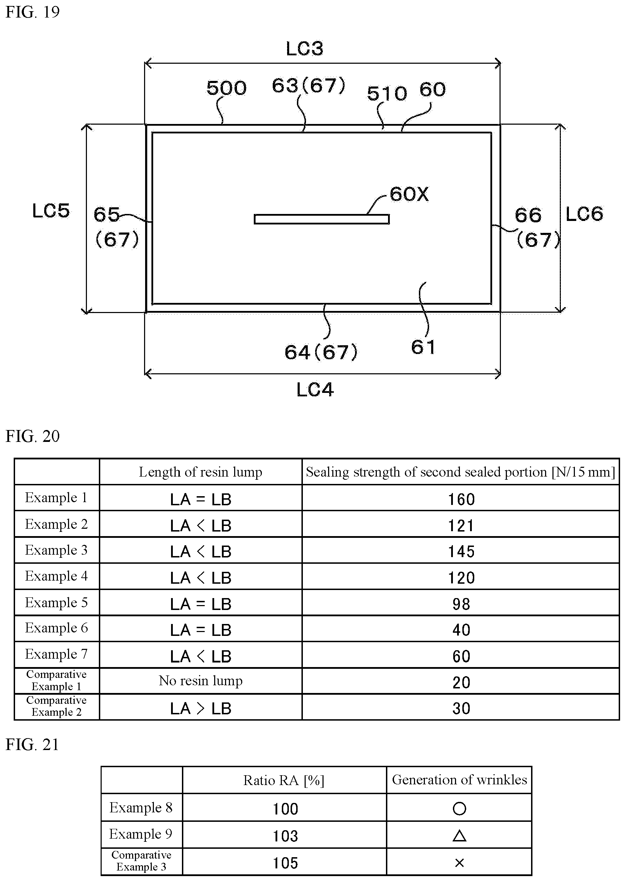

Fig. 18 is a sectional view of the electrical storage device 200 according to the modification of the second embodiment which is viewed from a lateral surface of the second sealed portion 80. Fig. 19 is a front view of the lid 60 of Fig. 18 to which the adhesive film 500 is bonded. The adhesive film 500 includes, in the second sealed portion 80, a bonding portion 510 bonded to the exterior film 50 and the lid 60, and a protrusion portion 520 protruding from the lid seal surface 67 of the lid 60. In Fig. 19, the protrusion portion 520 is not shown. For example, the adhesive film 500 is wound around the lid 60 so as to cover the entire surface of the lid seal surface 67 of the lid 60. In this modification, the inner resin lump 310 is formed between the exterior film 50 and the first surface 61 of the lid 60, more specifically, at a boundary between the exterior film 50 and the adhesive film 500. The outer resin lump 320 is formed between the exterior film 50 and the second surface 62 of the lid 60, more specifically, at a boundary between the exterior film 50 and the adhesive film 500. The adhesive film 500 is configured to be wider than the lid seal surface 67 of the lid 60 as a whole because the adhesive film 500 includes the protrusion portion 520. Therefore, the adhesive film 500 can be easily bonded to the lid 60. Further, since corners at boundaries between surfaces of the lid 60 are covered with the adhesive film 500, bondability between the lid 60 and the adhesive film 500 is enhanced. The inner resin lump 310 and the outer resin lump 320 may be formed between the lid 60 and the adhesive film 500.

The adhesive film 500 can be arbitrarily selected as long as it is a film capable of bonding exterior film 50 and lid 60. The adhesive film 500 is preferably a laminate (laminate film) including at least a heat-sealable resin layer, a heat-resistant base material layer and a heat-sealable resin layer in the stated order. As specifications about the heat-sealable resin layer of the adhesive film 500, specifications about the heat-sealable resin layer 53 can be applied. As materials for forming the heat-sealable resin layers on both sides of the adhesive film 500, the same material or different materials may be used, and materials that match the material for forming constituting the heat-sealable resin layer 53 of the exterior film 50 and the material for forming the lid 60 are appropriately selected. The material for forming the heat-sealable resin layer of the adhesive film 500, which is bonded to the lid 60, is preferably an acid-modified polyolefin-based resin obtained by graft modification with an acid such as maleic anhydride. For the heat-sealable resin layer of the adhesive film 500, which is bonded to the exterior film 50, the same material as that for forming the heat-sealable resin layer 53 of the exterior film 50.

For the heat-resistant base material layer, any film may be used as long as it is made from a heat-resistant resin, and examples thereof include non-stretched or stretched films of polyethylene terephthalate, polyethylene naphthalate, polyphenylene sulfide, polymethylpentene (registered trademark), polyacetal cyclic polyolefin, polyethylene, polypropylene and the like. Polyethylene terephthalate is particularly preferable because it is inexpensive and has high strength.

The adhesive film 500 preferably has adhesion. When the second sealed portion 80 is formed with the adhesive film 500 disposed between the exterior film 50 and the lid 60, the adhesive film 500 is hardly displaced with respect to the lid 60 and the exterior film 50. By incorporating an adhesion-imparting resin into the heat-sealable resin layer of the adhesive film 500, adhesion can be imparted to the adhesive film 500. Examples of the adhesion-imparting resin include amorphous polyolefins. Examples of the amorphous polyolefin include amorphous polypropylene, and copolymers of amorphous propylene and another α-olefin. The content of the adhesion-imparting resin with respect to the parent material forming the heat-sealable resin is preferably 10 to 20 wt% or less.

In this modification, the length LA of the lid wrapping portion 50X (see Fig. 3) and the length LCX of the bonding portion 510 may be set to suppress generation of wrinkles in the outer packaging 40 in formation of the second sealed portion 80 in the outer packaging 40. The length LCX of the bonding portion 510 is a sum of the length LC3, the length LC4, the length LC5 and the length LC6. The length LC3 is a length of a portion of the bonding portion 510 which is bonded to the third surface 63. The length LC4 is a length of a portion of the bonding portion 510 which is bonded to the fourth surface 64. The length LC5 is a length of a portion of the bonding portion 510 which is bonded to the fifth surface 65. The length LC6 is a length of a portion of the bonding portion 510 which is bonded to the sixth surface 66. In this modification, a ratio of the length LA to the length LCX, RC is preferably 103% or less. Since the difference between the length LA and the length LCX is small, the exterior film 50 is unlikely to sag. This suppresses generation of wrinkles in the outer packaging 40 in formation of the second sealed portion 80 in the outer packaging 40. The lower limit value of the ratio RC is a value when the length LA and the length LCX are equal to each other, that is, 100%.

### [4. Examples]

The inventors of the present application conducted first and second tests for electrical storage devices of examples and a comparative example. The first test is a test for measurement of the sealing strength of a second sealed portion 80. The second test is a test for confirmation of whether an outer packaging 40 has wrinkles or not. In the following description, among the elements forming the electrical storage devices of examples and the comparative example, elements that are identical to those in the embodiment are given the same symbols as in the embodiment for illustration purpose.

### <4-1. First test>

In the first test, electrical storage devices of Examples 1 to 7 and electrical storage devices of Comparative Examples 1 and 2 were manufactured, a cross-section was observed, the state of a resin lump was observed, and the sealing strength was measured by peeling an exterior film 50 in a direction from the first surface 61 side toward the second surface 62 side of a lid 60 with the use of an autograph (AG-Xplus manufactured by Shimadzu Corporation). The method for measuring the sealing strength is as follows. The lid 60 and the exterior film 50 to be measured were cut out from the manufactured electrical storage device 10 of each of examples and comparative examples, the exterior film 50 was cut into a width of 15 mm along a direction of measurement, and chucked with the lid 60 on the lower side and the exterior film 50 on the upper side of an autograph chuck section, and the measurement was performed at 300 mm/min. The specifications of the electrical storage devices of Examples 1 to 5 and the electrical storage devices of Comparative Examples 1 and 2 are as follows.

Each of the electrical storage devices of Examples 1, 5 and 6 is the electrical storage device 10 according to the first embodiment. Each of the electrical storage devices of Examples 2 to 4 and 7 is the electrical storage device 200 according to the second embodiment. The lid 60 of the electrical storage device 200 of each of Examples 2 and 7 has a shape shown in Fig. 12, where a sloping surface 63Z is formed at the third surface 63. The lid 60 of the electrical storage device 200 of Example 3 has a shape shown in Fig. 10, where a slit 63X is formed on the third surface 63. The lid 60 of the electrical storage device 200 of Example 4 has a shape shown in Fig. 11, where a groove 63Y is formed on the third surface 63.

For the sealing conditions of a second sealed portion 80 of the electrical storage device of each of Examples 1 to 4, the temperature is 220°C, the time is 5 seconds, and the pressure is 0.4 MPa. For the sealing conditions of the second sealed portion 80 of the electrical storage device of Example 5, the temperature is 230°C, the time is 5 seconds, and the pressure is 0.4 MPa. For the sealing conditions of the second sealed portion 80 of the electrical storage device of Example 6, the temperature is 200°C, the time is 5 seconds, and the pressure is 0.4 MPa. For the sealing conditions of the second sealed portion 80 of the electrical storage device of Example 7, the temperature is 210°C, the time is 5 seconds, and the pressure is 0.4 MPa.

The electrical storage devices of Examples 1, 5 and 6 include an inner resin lump 310 and an outer resin lump 320, and the length LA and the length LB are equal to each other. In the electrical storage device of Example 1, the ratio RB is 160%. In the electrical storage device of Example 5, the ratio RB is 240%. In the electrical storage device of Example 6, the ratio RB is 260%. The electrical storage devices of Examples 2 to 4 and 7 include the inner resin lump 310 and the outer resin lump 320, and the length LA is smaller than the length LB.

The specifications of the electrical storage device of Comparative Example 1 are identical to those of the electrical storage device of Example 1 except for the sealing conditions of the second sealed portion 80. For the sealing conditions of the second sealed portion 80 of the electrical storage device of Comparative Example 1, the temperature is 190°C, the time is 5 seconds, and the pressure is 0.4 MPa. The electrical storage device of Comparative Example 1 does not include the inner resin lump 310 and the outer resin lump 320.

The specifications of the electrical storage device of Comparative Example 2 are identical to those of the electrical storage devices of Examples 2 to 4 except for the sealing conditions of the second sealed portion 80. For the sealing conditions of the second sealed portion 80 of the electrical storage device of Comparative Example 2, the temperature is 220°C, the time is 3 seconds, and the pressure is 0.4 MPa. The electrical storage devices of Comparative Example 2 includes the inner resin lump 310 and the outer resin lump 320, and the length LA is larger than the length LB.

Fig. 20 is a table showing results of the first test. It was confirmed that in the electrical storage devices of Examples 1 to 7, high sealing strength was obtained as the sealing strength of the second sealed portion 80. From the results of the test on the electrical storage device of Example 1, it was confirmed that although the length LA and the length LB were equal to each other, high sealing strength was obtained by setting the ratio RB to 200% or less. From the results of the test on the electrical storage devices of Examples 2 to 4, it was confirmed that high sealing strength was obtained by making the length LA smaller than the length LB. It was confirmed that the sealing strength of the second sealed portion 80 in the electrical storage device of each of Examples 5 and 6 was lower than that in the electrical storage device of Example 1. One of reasons for this may be that the ratio RB is 200% or more.

### <4-2. Second test>

In the second test, electrical storage devices of Examples 8 and 9 and an electrical storage device of Comparative Example 3 were manufactured, and the number of wrinkles of the outer packaging 40 was visually confirmed. The specifications of the electrical storage devices of Examples 8 and 9 and the electrical storage devices of Comparative Example 3 are as follows.

Each of the electrical storage devices of Examples 8 and 9 is the electrical storage device 10 according to the first embodiment. In the electrical storage devices of Examples 8 and 9, the sealing conditions of the first sealed portion 70 are such that the temperature is 210°C, the time is 5 seconds and the pressure is 0.5 MPa, and the sealing conditions of the second sealed portion 80 are such that the temperature is 220°C, the time is 5 seconds and the pressure is 0.5 MPa. In the electrical storage device of Example 8, the ratio RA is 100%. In the electrical storage device of Example 9, the ratio RA is 103%.

The specifications of the electrical storage device of Comparative Example 3 are identical to those of the electrical storage device of each of Examples 8 and 9 except for the ratio RA. In the electrical storage device of Comparative Example 3, the ratio RA is 105%.

Fig. 21 is a table showing results of the second test. In the section "Generation of wrinkles" in Fig. 18, "O" indicates that there are no wrinkles, "△" indicates that the number of locations at which wrinkles are generated is 3 or less, and " ×" indicates that the number of locations at which wrinkles are generated is 4 or more.

It was confirmed that in Examples 8 and 9, wrinkles were not generated in the outer packaging 40, or generation of wrinkles was suppressed. This may be because in the electrical storage devices of Examples 8 and 9, the ratio RA is 103% or less. Reference Signs List

10, 200 Electrical storage device
20 Electrode assembly
40 Outer packaging
50 Exterior film
53 Heat-sealable resin layer
60 Lid
61 First surface
62 Second surface
63X Slit
63XA Sloping surface
63XB Sloping surface
63YA Sloping surface
63YB Sloping surface
63Y Groove
63Z Sloping surface
67 Lid seal surface
70 First sealed portion
80 Second sealed portion
310 Inner resin lump
320 Outer resin lump
500 Adhesive film
510 Bonding portion

## Claims

1. An electrical storage device comprising:
an electrode assembly; and
an outer packaging that seals the electrode assembly, wherein
the outer packaging includes:
an exterior film wound around the electrode assembly so as to have an opening;
a lid disposed at the opening;
a first sealed portion in which surfaces of the exterior film which face each other are sealed; and
a second sealed portion in which surfaces of the lid and the exterior film which face each other are sealed, and
a sealing strength of the second sealed portion is 40 N/15 mm or more.

2. An electrical storage device comprising:
an electrode assembly; and
an outer packaging that seals the electrode assembly, wherein
the outer packaging includes:
an exterior film wound around the electrode assembly so as to have an opening;
a lid disposed at the opening;
a first sealed portion in which surfaces of the exterior film which face each other are sealed; and
a second sealed portion in which surfaces of the lid and the exterior film which face each other are sealed,
the lid includes a first surface on the electrode assembly side, and a second surface opposite to the first surface,
an inner resin lump is formed between the first surface and the exterior film,
an outer resin lump is formed between the second surface and the exterior film, and
a length of the inner resin lump is smaller than a length of the outer resin lump.

3. An electrical storage device comprising:
an electrode assembly; and
an outer packaging that seals the electrode assembly, wherein
the outer packaging includes:
an exterior film wound around the electrode assembly so as to have an opening;
a lid disposed at the opening;
a first sealed portion in which surfaces of the exterior film which face each other are sealed; and
a second sealed portion in which surfaces of the lid and the exterior film which face each other are sealed,
the exterior film includes a lid wrapping portion that is sealed to the lid in the second sealed portion,
the lid includes a lid seal surface that is sealed to the exterior film in the second sealed portion, and
a ratio of a length of the lid wrapping portion to a length of the lid seal surface is 103% or less.

4. The electrical storage device according to claim 1 or 3, wherein
the lid includes a first surface on the electrode assembly side, and a second surface opposite to the first surface,
an inner resin lump is formed between the first surface and the exterior film, an outer resin lump is formed between the second surface and the exterior film, the exterior film includes a heat-sealable resin layer that is sealed to the lid, and a ratio of a thickness of the inner resin lump to a thickness of the heat-sealable resin layer is 200% or less.

5. The electrical storage device according to claim 3, wherein the sealing strength of the second sealed portion is 40 N/15 mm or more.

6. The electrical storage device according to any one of claims 1 to 3, wherein
the exterior film includes a heat-sealable resin layer that is sealed to the lid, and main components of a material for forming the heat-sealable resin layer and a material for forming the lid are the same.

7. The electrical storage device according to claim 3, wherein
the lid includes a first surface on the electrode assembly side, and a second surface opposite to the first surface,
an inner resin lump is formed between the first surface and the exterior film, an outer resin lump is formed between the second surface and the exterior film, and
a length of the inner resin lump is smaller than a length of the outer resin lump.

8. The electrical storage device according to claim 3, wherein
the lid includes a first surface on the electrode assembly side, and a second surface opposite to the first surface,
an inner resin lump is formed between the first surface and the exterior film, an outer resin lump is formed between the second surface and the exterior film, the exterior film includes a heat-sealable resin layer that is sealed to the lid, and
a ratio of a thickness of the inner resin lump to a thickness of the heat-sealable resin layer is 200% or less.

9. A lid that is used for an outer packaging of an electrical storage device, wherein
the outer packaging includes an exterior film wound around an electrode assembly so as to have an opening,
the lid is disposed at the opening, and includes a seal surface that is sealed to the exterior film, and
the seal surface includes a streak-shaped slit.

10. A lid that is used for an outer packaging of an electrical storage device, wherein
the outer packaging includes an exterior film wound around an electrode assembly so as to have an opening,
the lid is disposed at the opening, and includes a seal surface that is sealed to the exterior film, and
the seal surface includes a groove.

11. A lid that is used for an outer packaging of an electrical storage device, wherein
the outer packaging includes an exterior film wound around an electrode assembly so as to have an opening,
the lid is disposed at the opening, and includes a first surface on the electrode assembly side, a second surface opposite to the first surface, and a seal surface that connects the first surface and the second surface, and is sealed to the exterior film, and
the seal surface includes a sloping surface that slopes so as to approach a center of the lid in a height direction as the first surface is approached from the second surface.

12. An electrical storage device comprising the lid according to any one of claims 9 to 11,
the electrical storage device comprising an electrode assembly; and
an outer packaging that seals the electrode assembly,
the outer packaging including:
an exterior film wound around the electrode assembly so as to have an opening;
the lid disposed at the opening;
a first sealed portion in which surfaces of the exterior film which face each other are sealed; and
a second sealed portion in which surfaces of the lid and the exterior film which face each other are sealed.

13. A method for manufacturing an electrical storage device including an electrode assembly, and an outer packaging that seals the electrode assembly, wherein
the outer packaging includes:
an exterior film wound around the electrode assembly so as to have an opening;
a lid disposed at the opening;
a first sealed portion in which surfaces of the exterior film which face each other are sealed; and
a second sealed portion in which surfaces of the lid and the exterior film which face each other are sealed,
the lid includes a first surface on the electrode assembly side, and a second surface opposite to the first surface,
the method for manufacturing the electrical storage device comprises a sealing step of forming the second sealed portion using a seal bar, and
in the sealing step, the seal bar is sloped so as to draw closer to a boundary between the first surface and the exterior film than to a boundary between the second surface and the exterior film.

14. A method for manufacturing an electrical storage device including an electrode assembly, and an outer packaging that seals the electrode assembly, wherein
the outer packaging includes:
an exterior film wound around the electrode assembly so as to have an opening;
a lid disposed at the opening;
a first sealed portion in which surfaces of the exterior film which face each other are sealed; and
a second sealed portion in which surfaces of the lid and the exterior film which face each other are sealed,
the lid includes a first surface on the electrode assembly side, and a second surface opposite to the first surface,
the method for manufacturing the electrical storage device comprises a sealing step of forming the second sealed portion using a seal bar, and
in the sealing step, a sealing temperature for a portion including a boundary between the first surface and the exterior film is lower than a sealing temperature for a portion including a boundary between the second surface and the exterior film.
